# EUROPEAN PATENT SPECIFICATION

(11) **EP 0 905 020 B1**
(45) Date of publication and mention of the grant of the patent: **15.12.2004**
(21) Application number: 97830483.0
(22) Date of filing: 30.09.1997
(51) Int. Cl.: B64F 1/00

(54) **Rigid, jointed piping for conditioning an aircraft in advance**
Starre Rohre zur Klimatisierung eines Flugzeuges
Tuyaux rigides pour le conditionnement d'air d'un avion

(43) Date of publication of application: 31.03.1999
(73) Proprietor: Sefind Servizi e Forniture Industriali s.r.l., 00181 Roma (IT)
(72) Inventor: Pietropaoli, Paolo, 00181 Roma (IT)
(74) Representative: Sarpi, Maurizio

(56) References cited:
- EP-A- 0 621 175
- US-A- 4 572 550
- US-A- 4 632 019
- US-A- 4 844 133
- US-A- 4 844 533

## Description

The present invention relates to the maintenance and ground service of an aircraft and particularly concerns the air conditioning of the aircraft compartments before takeoff or after landing when the propulsion engines are stopped.

All of the modern aircrafts provided with pressurized cabin for high-altitude flight are also provided with an air conditioning and pressurizing system which keeps the inside of the cabin under ideal conditions during the flight. Such conditioning system is generally supplied with the pressurized air drawn off from the propelling turbines of the aircraft and is energized by the power produced by the same.

Alternately, such system is supplied by the so-called APU (Auxiliary Power Unit) which usually is a power generator driven by a small turbine other than the propulsion turbines.

During the stop of an aircraft in the hardstand all of its turbines are generally turned off both for fuel consumption and airport noise pollution reasons. Therefore, the cabin air cannot be conditioned.

In this connection it should be appreciated that the air cabin can reach temperatures greater than 40°C during the summer with the result of self-evident, not negligible discomfort of passengers.

In order to overcome such problem the air conditioning system of the aircraft is currently connected to an outboard air conditioning apparatus. Such connection is a piping. The whole operation is called "pre-conditioning of the aircraft" in the technicians' slang. Presently such piping is a flexible pipe or a hose consisting of, if necessary insulated, plastic or nylon which is laid manually by the ground operators so as to assume the form of a pipe once pressurized.

Such a solution of connecting an air conditioning apparatus to the air conditioning system of the aircraft has, however, a number of problems and drawbacks.

One drawback is that it is necessary to arrange from time to time a piping of the right length according to the distance between aircraft and air conditioning apparatus as any too sharp bend cause a narrowing in the per se flexible piping.

A second drawback is that the chance arrangement of the hose after the inlet of the pressurized, conditioned air frequently prevents or impede the ramps from approaching the aircraft, e.g. for refuelling, water supplying, catering, etc.

A third drawback is that the hose is frequently left in the hardstand without being put back in proper containers with the danger of being sucked up by the engines of the aircrafts which are about to park and/or to approach the airport facilities.

A fourth drawback is the fast wear and tear of the flexible tube or hose because of its dragging on the ground.

A fifth drawback concerns the discomfort of the operator who shall bend down several times for unravelling and stretching correctly out the hose so as to avoid a narrowing when the same is pressurized.

A sixth drawback of merely aesthetic nature but not less important is that the condensate which is formed on the hose causes the same to be slippery and to get easily dirty when it is dragged on the ground.

Still another drawback of the art is that any irregular bend and the shape assumed by the hose cause a remarkable flow resistance and generate ice on the evaporators of the air conditioning apparatus.

Another prior art air pipe system is known from US-A-4 572 550. It is formed of a plurality of moving lengths of rigid piping connected by air-tight, rigid swivel joints which allow the piping to be easily stretched out or contracted in order to take on any length and shape while always keeping the cross section constant.

The present invention seeks to overcome all of the above-mentioned problems by providing a rigid, jointed piping movable on wheels according to claim 1.

Suitable shackles facilitate the handling of the pipe system by the operators.

The advantages of such a solution are self-evident:
- whatever length the aircraft has, it is not necessary for the operators to modify the length of the piping by adding hose lengths but only to extend the section concerned;
- the piping can take on any shape due to the swivel joints and to also pass beneath the aircraft without interfering with the ramps;
- due to stiffness and stability of the piping no danger for the same to be sucked up by the engines of the aircrafts which are being moved;
- due to its movability the piping can be easily compacted near the air conditioning apparatus;
- the piping is not subjected to any mistreatment and its deterioration is strongly reduced because only its wheels are in contact with the ground while the operators make use of suitable grip shackles;
- the operators' discomforts are reduced to a minimum because the piping can be easily moved without causing a narrowing by the ergonomic intervention of the operators;
- the development of condensate is strongly reduced;
- the shape of the swivel joint provided between the several lengths of piping guarantees a minimum flow resistance in the bends and avoids a narrowing.

Further features and advantages of the present invention will be more readily apparent from the following detailed description with reference to the accompanying drawings which show by way of a not limiting example a preferred embodiment of the invention. In the drawings:
Fig. 1 is a side elevation view of the system with the piping under compacted condition;
Fig. 2 shows a front elevation view of the same piping of Fig. 1;
Fig. 3 is a plan view of the same piping connected to the air conditioning apparatus;
Fig. 4 shows the piping during the extension;
Fig. 5 is a detail of the swivel joint acting as articulated joint between adjacent piping lengths.

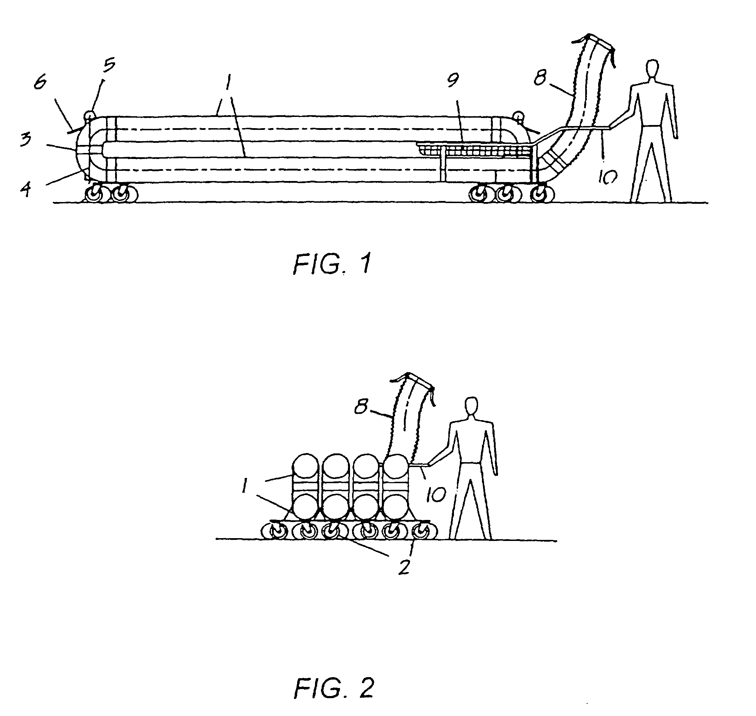

With reference to Fig. 1 the rigid, jointed piping of this invention is essentially formed of a plurality of movable sections of rigid piping 1 connected to one another by rigid air-tight swivel joints 3. In the illustrated embodiment such movable sections 1 are in a number of seven and have each a length of about 5,00 m. Of course, both the number of the sections and the length thereof is given only by way of a merely indicative example, such values being able to widely vary at will.

Four of such seven sections are supported at their ends by two pairs of pivoting wheels 2 with such an axle base as to guarantee a good stability against overturning while the other three sections are supported by the swivel joints 3 acting also as articulated joints among the several pipe sections.

According to a preferred embodiment the piping consists of straight pipe sections 1 and 90° elbows 13 of reinforced PVC having an inner diameter of 300 mm and a suitable wall thickness.

The air tightness of the swivel joints 3 is ensured by seals of the O-ring type located within suitable seats 11, while pipe sections and elbows are connected to one another by radial bolts 12.

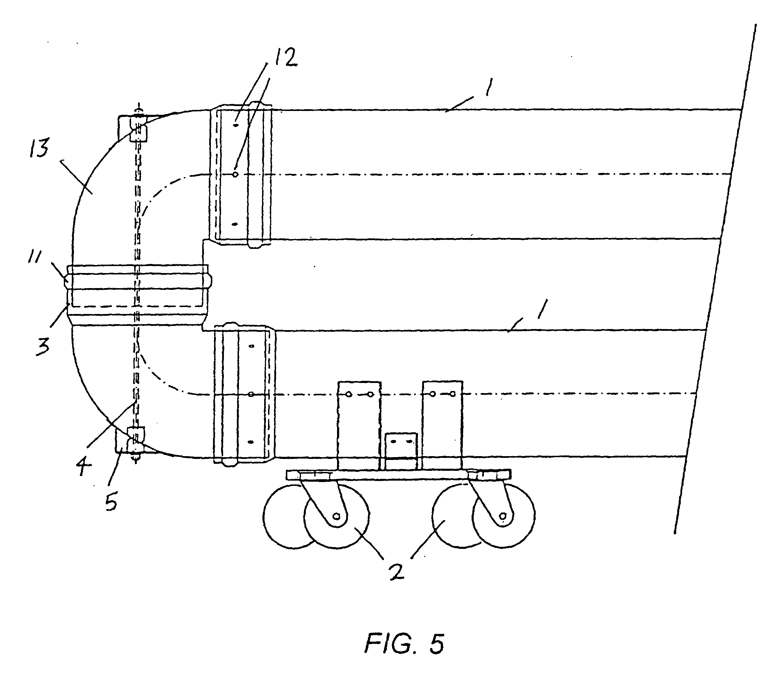

As can be seen in Fig. 5, swivel joints 3 carry at their rotation axis spindles 4 acting as tie rods adapted to prevent the joints from splitting up.

Bumpers 5 of flexible plastic material and shackles 6 to facilitate the handling of the pipe system by the operators are provided at the supports of such spindles.

As the rotation axis of such swivel joints 3 is vertical, it is evident that the piping will consists of lower pipe sections and upper pipe sections. Such characteristic advantageously allows a particularly compacted piling-up of the piping under rest conditions.

The first articulation joint near the air conditioning apparatus 14 is anchored to the ground by a bolt tightened to a plate 7 embedded in the concrete of the hardstand. The next articulation joints are provided with elastic means which facilitates the contraction of the pipe system. The last section 1 of the rigid piping is provided with a coupling for a hose 8 to be connected to the aircraft and with a basket-shaped container 9 where the hose is put back. A big circular shackle 10 allows an easy handling of the pipe system on all sides, as shown in Figs. 1 and 2.

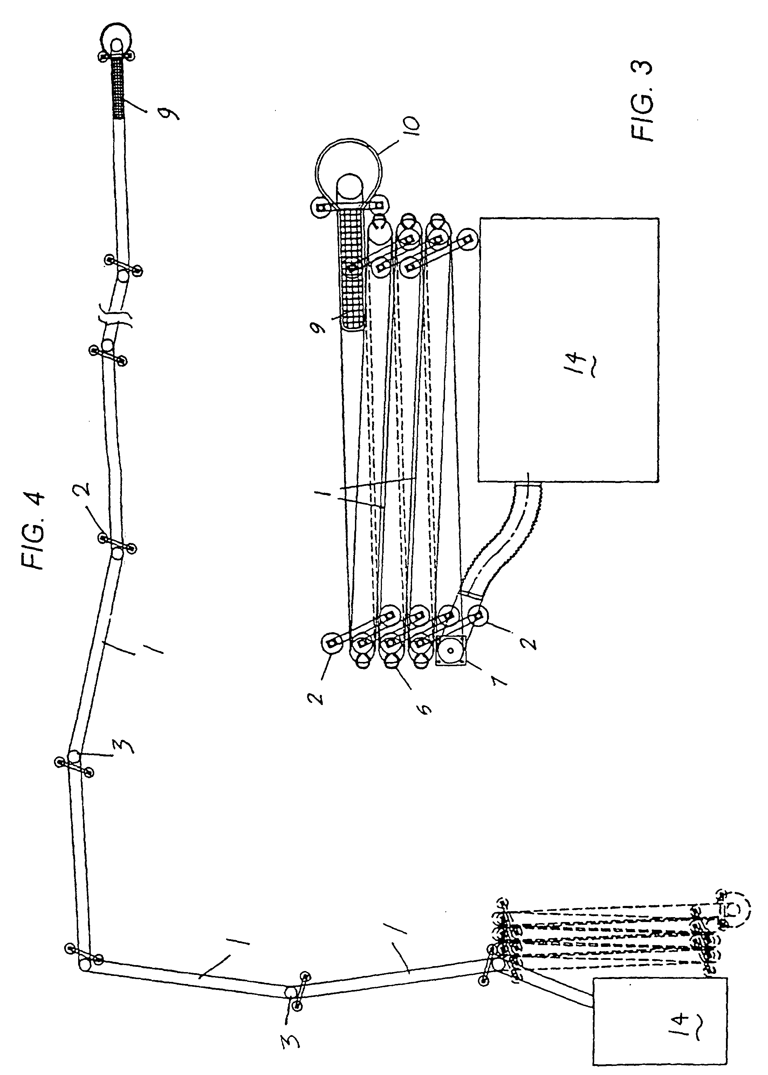

From the foregoing the functional capacity and the easy use of the invention is apparent: the whole pipe system can be handled by only one operator who can either extend or contract the piping, as shown in Fig. 4, by using the proper shackles 6.

## Claims

1. An air pipe system for connecting outboard air conditioning apparatus to the inboard air conditioning system of an aircraft, formed of a plurality of movable rigid air pipe sections (1) connected to one another by rigid, air-tight swivel joints (3) acting as articulated joints among the several pipe sections and which allow the piping to either be easily extended or contracted in order to take on any length and shape, while always keeping the cross section thereof constant; **characterized in that** the jointed air piping is movable on wheels, upper straight pipe sections (1) being supported at said swivel joints (3) by lower straight pipe sections (1) being supported by pairs of pivoting wheels (2) located transversally with respect to the longitudinal axis of pipe sections (1) near the articulated joints.

2. The air pipe system of claim 1, **characterized in that** said movable rigid piping consist of straight pipe sections (1) and 90 DEG elbows (13) for the connection to swivel joints (3).

3. The air pipe system of the preceding claims, **characterized in that** a last section of the rigid piping is provided with a coupling for a hose (8) suitable to be connected in a known manner to an aircraft and with a basket-shaped container (9) where the hose is put back.

4. The air pipe system of the preceding claims, **characterized in that** the end of the rigid piping suitable to be positioned near the outboard air conditioning apparatus (14) is provided with ground anchor means. (7) to keep its position constant with respect to said apparatus.

5. The air pipe system of the preceding claims, **characterized in that** swivel joints (3) carry at their rotation axis spindles (4) acting as tie rods adapted to prevent the joints from splitting up.

6. The air pipe system of claim 5, **characterized in that** bumpers (5) and shackles (6) to facilitate the handling of the pipe system are provided at the supports of such spindles (4).

7. The air pipe system of the preceding claims, **characterized in that** the air tightness of the swivel joints is ensured by O-ring seals located within suitable seats (11).

8. The air pipe system of the preceding claims when dependent on claim 2, **characterized in that** pipe sections (1) and 90 DEG elbows (13) are made of reinforced PVC.

9. The air pipe system of the preceding claims when dependent on claim 2, **characterized in that** pipe sections (1) and 90 DEG elbows (13) are connected to one another by radial bolts (12).

## Patentansprüche

1. Luftleitungssystem zum Verbinden einer Außen-Klimatisierungsvorrichtung mit dem Innen-Klimatisierungssystem eines Flugzeugs, gebildet aus einer Vielzahl von b eweglichen s tarren L uftleitungsabschnitten (1), d ie d urch s tarre, luftdichte Drehgelenke (3) miteinander verbunden sind, die als Gelenkverbindungen zwischen den verschiedenen Leitungsabschnitten dienen und die es ermöglichen, daß das Rohrleitungssystem leicht zu einer beliebigen Länge und Form ausgezogen oder zusammengeschoben werden kann, während sein Querschnitt immer gleich bleibt;
**dadurch gekennzeichnet, daß** das mit Gelenken versehene Luftleitungssystem auf Rädern verfahrbar ist, obere gerade Rohrabschnitte (1) an den Gelenkverbindungen (3) von unteren geraden Rohrabschnitte (1) getragen werden, die von schwenkbaren Radpaaren (2) getragen werden, die in Bezug auf die Längsachse der Rohrabschnitte (1) in der Nähe der Kippgelenke quer angeordnet sind.

2. Luftleitungssystem nach Anspruch 1, **dadurch gekennzeichnet, daß** das bewegliche starre Rohrleitungssystem aus geraden Leitungsabschnitten (1) und 90 °-Krümmem (13) für die Verbindung mit den Gelenkverbindungen (3) besteht.

3. Luftleitungssystem nach einem der vorangehenden Ansprüche, **dadurch gekennzeichnet, daß** der letzte Abschnitt des starren Leitungssystems mit einer Kupplung für einen Schlauch (8), der auf bekannte Weise m it e inem F lugzeug verbunden werden kann, und mit einem korbförmigen Behälter (9), in den der Schlauch zurückgebracht wird, versehen ist.

4. Luftleitungssystem nach einem der vorangehenden Ansprüche, **dadurch gekennzeichnet, daß** das Ende des starren Leitungssystems, das nahe der Außen-Klimatisierungsvorrichtung (14) positioniert werden kann, mit einer Bodenankereinrichtung (7) versehen ist, um seine Lage in Bezug auf die Anlage konstant zu halten.

5. Luftleitungssystem nach einem der vorangehenden Ansprüche, **dadurch gekennzeichnet, daß** die Gelenkverbindungen (3) an ihren Drehachsen Spindeln (4) aufweisen, die als Spannstangen wirken, die dafür ausgelegt sind, ein Auseinanderfallen der Gelenke zu verhindern.

6. Luftleitungssystem nach Anspruch 5, **dadurch gekennzeichnet, daß** Stoßdämpfer (5) und Laschen (6), um die Handhabung des Leitungssystems zu erleichtern, an den Trägem der Spindeln (4) bereitgestellt sind.

7. Luftleitungssystem nach einem der vorangehenden Ansprüche, **dadurch gekennzeichnet, daß** die Luftdichtigkeit der Gelenkverbindungen durch O-Ringe, die in geeigneten Dichtsitzen liegen, gewährleistet wird.

8. Luftleitungssystem nach einem der vorangehenden Ansprüche, sofern diese auf Anspruch 2 bezogen sind, **dadurch gekennzeichnet, daß** die Leitungsabschnitte (1) und die 90 °-Krümmer (13) aus verstärktem PVC bestehen.

9. Luftleitungssystem nach einem der vorangehenden Ansprüche, sofern diese auf Anspruch 2 bezogen sind, **dadurch gekennzeichnet, daß** die Leitungsabschnitte (1) und die 90 °-Krümmer (13) durch radial angebrachte Bolzen (12) miteinander verbunden sind.

## Revendications

1. Système de tuyaux d'air pour connecter un appareil de conditionnement d'air extérieur à l'appareil de conditionnement d'air intérieur d'un avion, formé d'une pluralité de sections de tuyaux rigides mobiles (1) reliées l'une à l'autre par des joints à rotule hermétiques rigides (3) agissant comme des joints articulés entre les diverses sections de tuyaux et qui permettent aux tuyaux d'être facilement étendus ou contractés afin de prendre toute longueur et forme, tout en gardant toujours leur section transversale constante, **caractérisé en ce que** les tuyaux d'air joints sont déplaçables sur roulettes, les sections de tuyaux droites supérieures (1) étant supportées au niveau desdits joints à rotule (3) par des sections de tuyaux droites inférieures (1) supportées par des paires de roulettes pivotantes (2) situées transversalement par rapport à l'axe longitudinal des sections de tuyaux (1) à proximité des joints articulés.

2. Système de tuyaux d'air selon la revendication 1, **caractérisé en ce que** lesdits tuyaux rigides mobiles consistent en des sections de tuyaux droites (1) et des coudes à 90 degrés (13) pour la connexion aux joints à rotule (3).

3. Système de tuyaux d'air selon les revendications précédentes, **caractérisé en ce qu'**une dernière section des tuyaux rigides est équipée d'un accouplement pour un tuyau flexible (8) approprié pour être connecter d'une manière connue à un avion et d'un containeur en forme de panier (9) dans lequel le tuyau flexible est remis.

4. Système de tuyaux d'air selon les revendications précédentes, **caractérisé en ce que** l'extrémité des tuyaux rigides appropriés pour être positionnés à proximité de l'appareil de conditionnement d'air extérieur (14) est équipée de moyens d'ancrage au sol (7) pour maintenir sa position constante par rapport audit appareil.

5. Système de tuyaux d'air selon les revendications précédentes, **caractérisé en ce que** les joints à rotule (3) portent au niveau de leur axe de rotation des broches (4) agissant comme des biellettes de direction adaptées pour empêcher les joints de se séparer.

6. Système de tuyaux d'air selon la revendication 5, **caractérisé en ce que** des amortisseurs (5) et des manilles (6) pour faciliter la manutention du système de tuyaux sont prévues au niveau des supports de ces broches (4).

7. Système de tuyaux d'air selon les revendications précédentes, **caractérisé en ce que** l'herméticité des joints à rotule est garantie par des joints toriques situés à l'intérieur de sièges appropriés (11).

8. Système de tuyaux d'air selon les revendications précédentes dépendantes de la revendication 2, **caractérisé en ce que** les sections de tuyaux (1) et les coudes à 90 degrés (13) sont faits en PVC renforcé.

9. Système de tuyaux d'air selon les revendications précédentes dépendantes de la revendication 2, **caractérisé en ce que** les sections de tuyaux (1) et les coudes à 90 degrés (13) sont reliés l'un à l'autre par des boulons radiaux (12).
